# EUROPÄISCHE PATENTSCHRIFT

(11) **EP 0 950 349 B1**
(45) Veröffentlichungstag und Bekanntmachung des Hinweises auf die Patenterteilung: **03.12.2003**
(21) Anmeldenummer: 99107526.8
(22) Anmeldetag: 15.04.1999
(51) Int. Cl.: A01F 29/22, B24B 3/42

(54) **Vorrichtung zum Schleifen der Häckselmesser an Trommel-Häckselmaschinen**
Grinding arrangement for cutting choppers of drum-chopper machine
Dispositif d'affûtage des couteaux hacheurs de machines de hachage à tambour

(30) Priorität: 17.04.1998 DE 19817176
(43) Veröffentlichungstag der Anmeldung: 20.10.1999
(73) Patentinhaber: Case Harvesting Systems GmbH, 01844 Neustadt (DE)
(72) Erfinder: Oliva, Christoph, Dipl.-Ing., 88348 Saulgau (DE)
(74) Vertreter: Müller, Lutz

(56) Entgegenhaltungen:
- FR-A- 1 458 827
- FR-A- 2 516 746
- GB-A- 2 028 191
- US-A- 1 469 755
- US-A- 3 748 786
- US-A- 4 192 103
- US-A- 5 321 912

## Beschreibung

Die Erfindung betrifft eine Vorrichtung zum Schleifen der Häckselmesser an Trommel-Häckselmaschinen zum Häckseln landwirtschaftlicher Erntegüter, wie Mais, Welkgut, Gras, Luzerne, Stroh, Sonderkulturen und dergleichen, forstwirtschaftlicher Kulturen bzw. sogenannter nachwachsender Rohstoffe, mit den Merkmalen nach dem Oberbegriff des Patentanspruches 1.

Bei bekannten Vorrichtungen dieser Art, wie beispielsweise nach der DD 138 494, ist oberhalb und parallel zur Rotationsachse der Häckseltrommel im Häckseltrommelgestell ein in Lagerstellen bewegbarer und fixierbarer Zentralträger aufgenommen. An einem seitlich am Zentralträger befestigten Flansch ist ein Antriebskettenrad drehbar gelagert, das mit einem Hydromotor in direkter Antriebsverbindung steht. Symmetrisch zum Antriebskettenrad in bezug auf die Mittelebene der Häckseltrommel befindet sich auf der anderen Seite am Zentralträger ein Umlenkkettenrad. Ein das Antriebskettenrad und das Umlenkkettenrad umschlingender Schleppkettentrieb wird von dem Hydromotor in einer Richtung angetrieben. Des weiteren sind am Zentralträger sich über dessen Länge erstreckende Führungsbahnen angebracht, auf denen ein Schleifwagen auf durch Stellprismen nachstellbaren Laufrollen verschiebbar ist. Am Schleifwagen ist ein den Schleppkettentrieb umfassender Führungsbügel befestigt, der mit seinen Fangschlitzen einen im Schleppkettentrieb befestigten Mitnehmerbolzen aufnimmt. Der Schleifwagen, der gegenüberliegend vom Führungsbügel einen Spannrahmen zur Aufnahme mehrerer nebeneinander angeordneter Schleifsteine besitzt, befindet sich durch den im Schleppkettentrieb befestigten und demzufolge mit umlaufenden Mitnehmerbolzen in einer ständigen Hin- und Herbewegung über der für den Schleifvorgang vorzugsweise rückwärts drehenden Häckseltrommel. Die Zustellung der Schleifsteine in Richtung der Häckseltrommel erfolgt einerseits durch Verdrehen des gesamten Zentralträgers in seinen Lagerstellen von Hand bzw. durch das Zusammenwirken eines Knaggenrades mit einem Anschlag am Ende jeder Hin- und Herbewegung des Schleifwagens. An dieser Schleifvorrichtung ist der hohe bauliche Aufwand zu bemängeln, da einmal eine beträchtliche Kettenlänge gebraucht wird. Zum anderen wirken auf das Umlenkettenrad während eines Teils der Hin- oder Herbewegung die doppelten Kettenzugkräfte ein, so daß dieses einschließlich seiner Halterung am Zentral träger sehr stabil ausgebildet sein muß. Das gleiche trifft demzufolge auch auf die Gestaltung und die Anbringung der Ritzel für die Kettenspannung zu. Dieser hohe bauliche Aufwand ist logischerweise auch immer mit einem höheren Montageaufwand verbunden. Schließlich sind auch der hohe Verschleiß und der hohe Wartungsaufwand dieses Antriebes der Schleifvorrichtung zu bemängeln, da umlaufende Kettentriebe unter solchen schweren Einsatzbedingungen bekanntlich bald die Grenzen ihrer Lebensdauer erreichen. Ein letzter Nachteil dieser Schleifvorrichtung ist noch die Störanfälligkeit während des Schleifens der Häckselmesser, da umlaufende Kettentriebe einer ständigen Verstopfungsgefahr durch Erntegutablagerungen ausgesetzt sind.

Mit der DE 31 46 433 A1 und der prinzipiell gleichen DE 41 28 483 A1 ist eine weitere Schleifvorrichtung zum Schleifen von Häckselmessern bekanntgeworden, die einen im Häckseltrommelgestell fixierten Zentralträger aufweist, der oberhalb der Häckseltrommel angeordnet und parallel zu deren Rotationsachse ausgerichtet ist. Auf dem Zentralträger ist ein Schleifwagen zum Ausführen von Hin- und Herbewegungen verschiebebeweglich befestigt, dessen Schleifstein auf die Häckseltromel radial zustellbar ist. Zum Antrieb des Schleifwagens dient ein doppelt wirkender hydraulischer Arbeitszylinder, der auf einer beidendig am Häckseltrommelgestell befestigten Kolbenstange parallel zur Häckseltrommel bewegt wird und durch Anlaufen eines Steuerhebels des mit ihm verbundenen Steuerventils an beidseitigen Anschlägen des Häckseltrommelgestells in seiner Bewegungsrichtung umsteuerbar ist. Am Arbeitszylinder ist ein Schleppseiltrieb mit zwei Umlenkrädern und einem auf diese aufgelegten Schleppseil vorgesehen, wobei am oberen Seilstrang des Schleppseiles ein Arm des Schleifwagens angeschlossen und der untere Seilstrang über eine Lasche etwa mittig zwischen den Seitenwänden am Häckseltrommelgestell gehalten ist.

An dieser Schleifvorrichtung ist ebenfalls der hohe bauliche Aufwand in Verbindung mit hohen Herstellungskosten zu bemängeln, da hydraulische Arbeitszylinder stets eine hohe Fertigungsgenauigkeit erfordern. Hinzu kommt der Aufwand für lange und ständig mitzubewegende Hydraulikschläuche nach der DE 31 46 433 A1 bzw. für die Herstellung komplizierter Längsbohrungen in den Kolbenstangen des doppeltwirkenden hydraulischen Arbeitszylinders nach der DE 41 28 483 A1. Da auch hier durch die Umlenkung der Zugkräfte im Schleppseil hohe Kräfte auftreten, ist dieser Antrieb dementsprechend stabil auszubilden, was sich ebenfalls negativ beim baulichen Aufwand auswirkt. Ein weiterer Nachteil ergibt sich noch aus der zeitaufwendigen Einstellung des Bewegungsweges für den Schleifwagen, weil der den Schleifstein tragende Schleifwagen die äußeren Enden der Häckseltrommel möglichst gleichmäßig überfahren muß. Das gestaltet sich mit einem um Umlenkräder gelegten Schleppseil nicht ganz einfach und außerdem ist dieses System anfällig gegen ungewolltes Verstellen, so daß diese zeitaufwendigen Einstellarbeiten noch relativ häufig zu wiederholen sind.

Schließlich ist noch auf eine weitere bekannte Schleifvorrichtung nach der EP 0 611 017 A1 hinzuweisen, bei der für die Gleitfühung des Schleifwagens oberhalb der Häckseltrommel je eine Führungsstange mit rundem und rechteckigem Querschnitt vorgesehen ist. Dessen Hin- und Herbewegung wird mittels eines Elektromotors realisiert, der außen auf einer Seitenwand des Häckseltrommelgestells befestigt ist und der mittels eines separaten Kettentriebes ein Doppelkettenrad antreibt, dessen untenliegendes Kettenrad das Antriebskettenrad für den umlaufenden Kettentrieb des Schleifwagens ist. Außen auf der gegenüberliegenden Seitenwand des Häckseltrommelgestells befindet sich dessen Umlenkkettenrad. Die Verbindung zwischen dem Schleifwagen und dem Schleppkettentrieb stellt ein Winkelstück her, dessen eines Ende fest mit einem Kettenglied des Schleppkettentriebes und dessen anderes Ende gelenkig mit dem Schleifwagen verbunden ist, so daß dieser bei seiner Hin- und Herbewegung die Häckseltrommel bis über die beiden Seitenwände des Häckseltrommelgestells hinaus überfahren kann. Als Nachteile für diese Schleifvorrichtung gelten die gleichen wie bereits bei der DD 138 494 ausgeführt, jedoch noch im verstärkten Maße, da hier der Schleppkettentrieb noch länger ist und der separate Kettentrieb noch dazu gekommen ist.

Der Vollständigkeit halber soll noch auf die Schleifvorrichtung nach der US 1,469,755 in einem Webstuhl hingewiesen werden, die zum Schärfen der Messer zum Schneiden einzelner dünner Fäden geeignet ist. Diese Schleifvorrichtung fährt die Kontur der im Webstuhl verbleibenden und sich im Stillstand befindenden Messer ab und schärft deren Schneidkanten mit einer rotierenden Schleifscheibe durch Hin- und Herbewegungen ihres Schlittens. Für eine Trommel- Häckselmaschine ist dieses Schleifprinzip völlig ungeeignet, da es einmal viel zu lange Schleifzeiten zur Folge hat und zum anderen im konstruktiven Aufbau für diesen Zweck zu kompliziert und deshalb folgerichtig in der Herstellung zu kostenintensiv ist. Aus diesem Grund wurde ein derartiges Schleifprinzip an Trommel- Häckselmaschinen bis heute auch noch nicht in der Praxis verwirklicht.

Deshalb liegt der Erfindung die Aufgabe zugrunde, eine Vorrichtung zum Schleifen der Häckselmesser an Trommel-Häckselmaschinen zu schaffen, die einen geringen baulichen Aufwand, wenig Montage- und Einstellzeit bei der Herstellung und wenig Wartungsaufwand erfordert, die nur geringe Verschleißerscheinungen zeigt und trotz starker Verunreinigungen funktionssicher im Betrieb ist.

Diese Aufgabe wird durch den Gegenstand des Patentanspruches 1 gelöst, wobei in den darauf zurückbezogenen Unteransprüchen Merkmale aufgeführt sind, die diese Lösungen in vorteilhafter Weise weiterentwickeln und auf die hier deshalb ausdrücklich verwiesen wird.

Durch das vom Antriebsmotor angetriebene Antriebskettenrad bzw. Antriebsstirnrad bewegt sich der Schleifwagen mit dem Antriebsmotor über die gesamte Breite der Häckseltrommel; da sich das Antriebskettenrad dabei auf dem gespannten Kettenstück bzw. das Antriebsstirnrad auf der Zahnstange abstützt. Mit dem Wechsel der Drehrichtung des Antriebskettenrades bzw. des Antriebsstirnrades wird die für das Überschleifen der Häckselmesser der Häckseltrommel notwendige Hin- und Herbewegung des gesamten Schleifwagens erzeugt. Letzteres ist durch an den Umkehrstellen des Schleifwagens am Gehäuse der Schleifvorrichtung angebrachte Signalgeber gewährleistet, deren Signal zum Beispiel über den Bordcomputer die Drehrichtung des Antriebsmotors bei jeder Signalgebung wechselt.

Es hat sich dabei als zweckmäßig erwiesen, das Kettenstück mit seinen Laschen in einer horizontalen Ebene liegend anzuordnen und das Antriebskettenrad demzufolge von der Seite eingreifen zu lassen, weil dadurch im Eingriffsbereich Erntegutablagerungen weitestgehend verhindert werden. Aus dem gleichen Grund soll sich das Antriebsstirnrad ebenfalls in einer horizontalen Ebene befinden und so mit der Zahnstange kämmen.

Darüber hinaus hat es sich bewährt, am Schleifsteinträger unmittelbar neben dem Antriebskettenrad und in der gleichen Ebene wie dieses liegend ein Führungsritzel anzuordnen, das den Umschlingungswinkel des Kettenstückes um das Antriebskettenrad vergrößert und damit für einen sicheren Durchzug des Schleifwagens bei seiner Hinund Herbewegung sorgt.

Als bevorzugte Ausführungsvarianten für den Antriebsmotor bieten sich entweder der Elektromotor oder der Hydromotor an.

Für die Signalgeber haben sich magnetische Sensoren bewährt, da diese unter schwierigen Einsatzbedingungen die längste Lebensdauer aufweisen.

Für das Anbringen und Spannen des Kettenstückes zwischen den feststehenden Seitenwänden des Häckseltrommelgestells, des Gehäuses der Schleifvorrichtung oder sonstiger Fixpunkte innerhalb der Trommel- Häckselmaschine ist sinnvoller Weise dessen eines Ende über einen einfachen Befestigungsbolzen und dessen anderes Ende über einen längenveränderlichen Spannbolzen an den Seitenwänden bzw. den Fixpunkten zu befestigen.

Sowohl für die Ausführungsvariant mit kettenstück als auch mit Zahnstange sind als Vorteile einmal der geringe bauliche Aufwand zu nennen, da im Vergleich zu den bisher bekannten Lösungen nur noch weniger und einfachere Teile benötigt werden. Demzufolge liegt auch die Montagezeit für die gesamte Schleifvorrichtung sehr niedrig. Einstellarbeiten gibt es aufgrund des erfindungsgemäßen Aufbaus gar nicht mehr. Auch die Verschleißerscheinungen und der Wartungsaufwand sind auf ein Minimum infolge des Fehlens umlaufender Kettentriebe gesunken.

Die Erfindung soll nun anhand eines Ausführungsbeispiels näher erläutert werden, wobei die einzelnen Figuren zeigen:
- Fig. 1:: eine Draufsicht auf die erfindungsgemäße Schleifvorrichtung
- Fig. 2:: einen Schnitt B-B nach Fig. 1
- Fig. 3:: eine Ansicht A nach Fig. 1

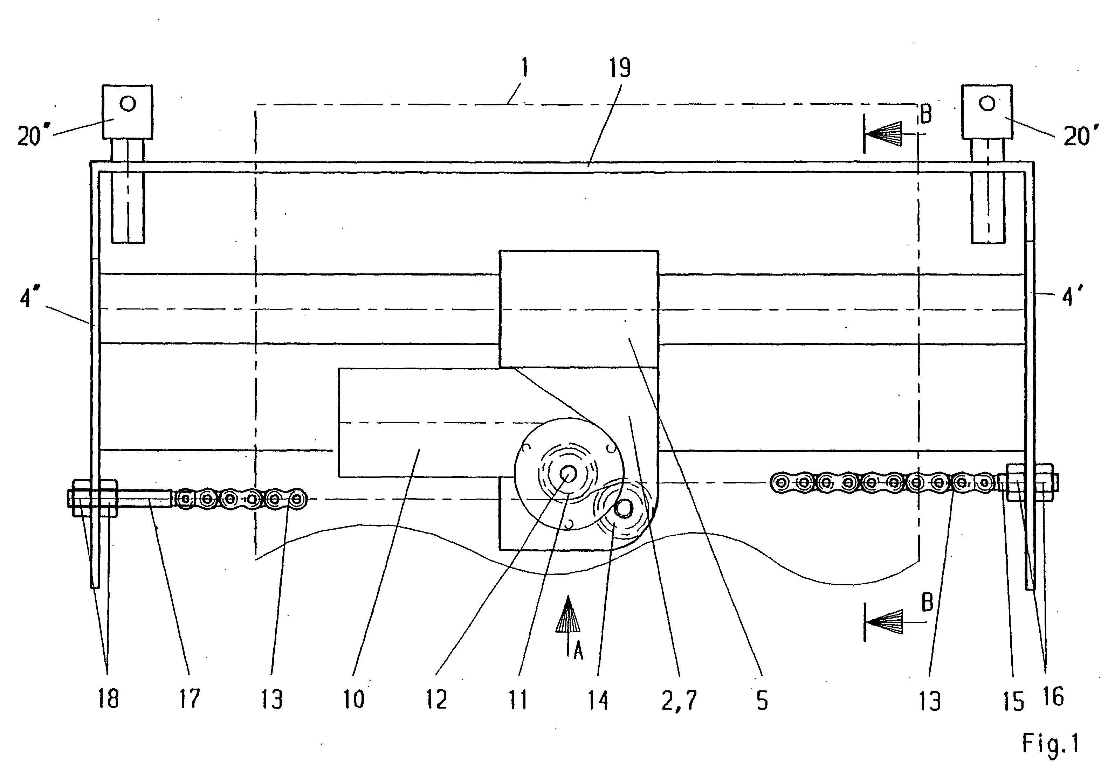

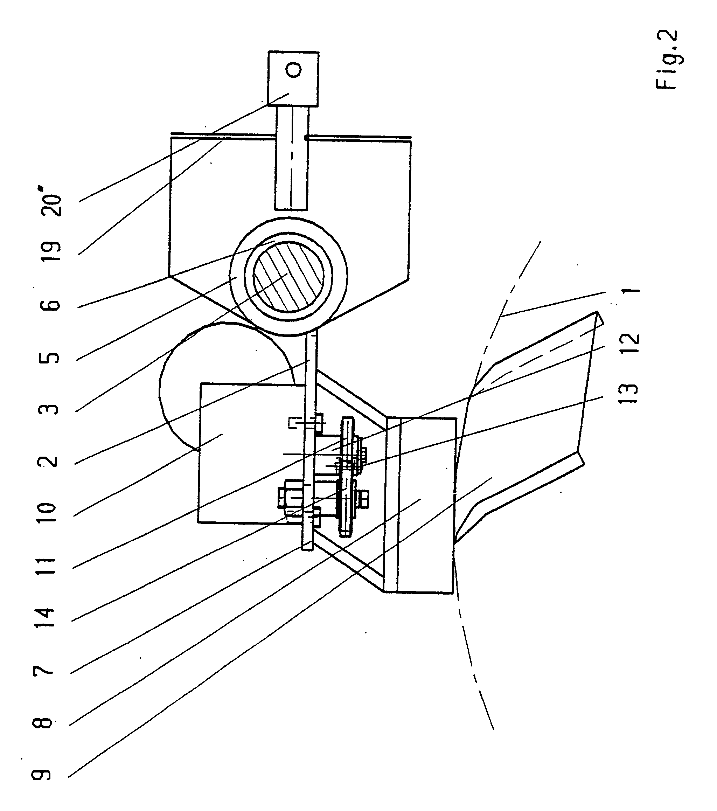

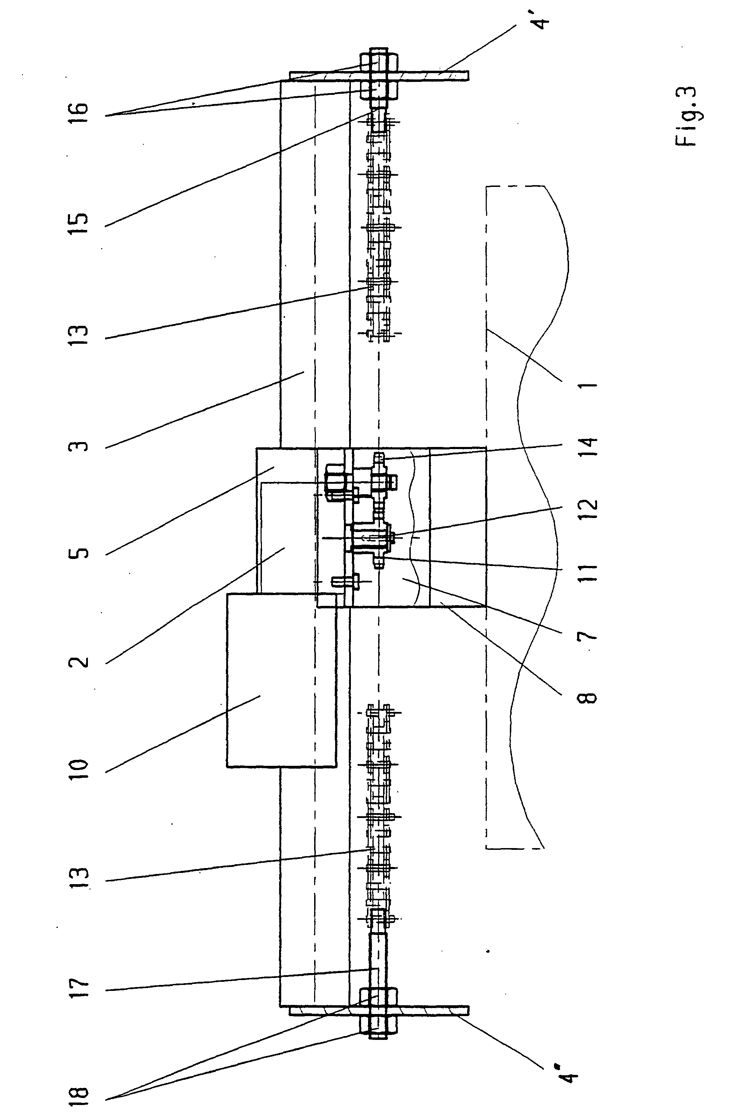

Die Figuren 1 bis 3 zeigen die üblicherweise oberhalb der strichpunktiert dargestellten Häckseltrommel 1 angeordnete Schleifvorrichtung. Sie besitzt zur Führung ihres Schleifwagens 2 einen sich wenigstens über die Breite der Häckseltrommel 1 erstrekkenden Zentral träger 3, der zwischen den feststehenden Seitenwänden 4', 4" des Häckseltrommelgestells bzw. des Gehäuses der Schleifvorrichtung befestigt ist. Seine Längsachse ist exakt parallel zur Rotationsachse der Häckseltrommel 1 ausgerichtet. Der Schleifwagen 2 ist über seine Führungshülse 5 und eine darin steckende Gleitbuchse 6 auf dem Zentralträger 3 verschiebebeweglich und verdrehsicher gelagert. An der Führungshülse 5 ist nach vorn zeigend der Schleifsteinträger 7 befestigt, an dessen Unterseite sich ein austauschfähiger Schleifstein 8 zum Schleifen der Häckselmesser 9 der Häckseltrommel 1 befindet. Der Schleifstein 8 ist auch mit geeigneten Mitteln auf die Häckselmesser 9 hin und von diesen weg verstellbar, was jedoch nicht dargestellt wurde, weil es außerhalb der Erfindung liegt.

Auf der Oberseite des Schleifsteinträgers 7 ist ein als Elektromotor ausgebildeter Antriebsmotor 10 angebracht, dessen mit einem Antriebskettenrad 11 ausgestattete Antriebswelle 12 sich vertikal nach unten erstreckt. Dieses Antriebskettenrad 11 steht mit einem gespannten Kettenstück 13 im Eingriff, das parallel zum Zentralträger 3 ausgerichtet ist und mit seinen Enden an der linken bzw. der rechten Seitenwand 4', 4" des Gehäuses der Schleifvorrichtung befestigt ist. Ein unmittelbar neben dem Antriebskettenrad 11 am Schleifsteinträger 7 angeordnetes Führungsritzel 14, das sich in der gleichen horizontalen Ebene wie das Antriebskettenrad 11 befindet, vergrößert den Umschlingungswinkel des Kettenstückes 13 um das Antriebskettenrad 11.

Die Befestigung des Kettenstückes 13 an den Seitenwänden 4', 4" ist einenends über einen Befestigungsbolzen 15 und Sechskantmuttern 16 und anderenends über einen in der wirksamen Länge einstellbaren Spannbolzen 17 und Sechskantmuttern 18 verwirklicht.

Schließlich befinden sich noch beidseitig in der Rückwand 19 des Gehäuses der Schleifvorrichtung nahe ihrer Seitenwände 4', 4'' als Signalgeber 20', 20'' fungierende magnetische Sensoren, die die äußeren Endstellungen des Schleifwagens 2 bei dessen Hin- und Herbewegung beim Schleifen signalisieren.

### Aufstellung der verwendeten Bezugszeichen

- 1: Häckseltrommel
- 2: Schleifwagen
- 3: Zentralträger
- 4', 4": Seitenwand
- 5: Führungshülse
- 6: Gleitbuchse
- 7: Schleifsteinträger
- 8: Schleifstein
- 9: Häckselmesser
- 10: Antriebsmotor
- 11: Antriebskettenrad/Antriebsstirnrad
- 12: Antriebswelle
- 13: Kettenstück/Zahnstange
- 14: Führungsritzel
- 15: Befestigungsbolzen
- 16: Sechskantmutter
- 17: Spannbolzen
- 18: Sechskantmutter
- 19: Rückwand
- 20', 20": Signalgeber

## Patentansprüche

1. Vorrichtung zum Schleifen der Häckselmesser (9) an Trommel- Häckselmaschinen:
◆ die die Häckselmesser (9) schärft, während diese mit einer hohen Umfangsgeschwindigkeit rotieren und der Schleifstein dabei feststeht,
◆ mit einer Einrichtung zur Führung des Schleifwagens (2) wenigstens über die Breite der Häckseltrommel (1) und in Richtung parallel zu deren Rotationsachse,
◆ mit einem am Schleifwagen (2) befestigten und zum Rotationskreis der Häckselmesser (9) der Häckseltrommel (1) zeigenden Schleifstein (8) und einem am Schleifwagen (2) angeordneten Antriebsmotor (10),
**dadurch gekennzeichnet, daß**
a) das Antriebskettenrad (11) oder Antriebsstirnrad (11) des Antriebsmotors (10) mit einem gespannten Kettenstück (13) oder einer Zahnstange (13) im Eingriff steht, das/die sich in Richtung der Einrichtung zur Führung des Schleifwagens (2) zwischen den feststehenden Seitenwänden (4', 4") des Häckseltrommelgestells bzw. des Gehäuses der Schleifvorrichtung erstreckt,
b) an den Umkehrstellen des Schleifwagens (2) bei seiner Hin- und Herbewegung Signalgeber (20', 20") zum Umschalten der Drehrichtung des Antriebsmotors (10) angeordnet sind.

2. Vorrichtung nach Anspruch 1, **dadurch gekennzeichnet, daß** sich bei einer Anordnung der Schleifvorrichtung oberhalb der Häckseltrommel (1) die Antriebswelle (12) des Antriebsmotors (10) vertikal nach unten erstreckt, so daß das Antriebskettenrad (11) oder das Antriebsstirnrad (11) in einer horizontalen Ebene mit dem Kettenstück (13) oder der Zahnstange (13) im Eingriff ist.

3. Vorrichtung nach den Ansprüchen 1 und 2, **dadurch gekennzeichnet, daß** unmittelbar neben dem Antriebskettenrad (11) und in der gleichen horizontalen Ebene wie dieses ein Führungsritzel (14) so angeordnet ist, daß es den Umschlingungswinkel des Kettenstückes (13) um das Antriebskettenrad (11) vergrößert.

4. Vorrichtung nach den Ansprüchen 1 bis 3, **dadurch gekennzeichnet, daß** der Antriebsmotor (10) ein Elektromotor ist.

5. Vorrichtung nach den Ansprüchen 1 bis 3, **dadurch gekennzeichnet, daß** der Antriebsmotor (10) ein Hydromotor ist.

6. Vorrichtung nach den Ansprüchen 1 bis 5, **dadurch gekennzeichnet, daß** die Signalgeber (20', 20") magnetische Sensoren sind, die auf die Annäherung des Schleifwagens (2) ansprechen.

7. Vorrichtung nach den Ansprüchen 1 bis 3, **dadurch gekennzeichnet, daß** das Kettenstück (13) zwischen den feststehenden Seitenwänden (4', 4") des Häckseltrommelgestells bzw. des Gehäuses der Schleifvorrichtung einenends über einen Befestigungsbolzen (15) und anderenends über einen in der wirksamen Länge einstellbaren Spannbolzen (17) angebracht ist.

## Claims

1. A device for grinding the chopper knife (9) on cylinder chopping machines:
◆ which sharpens the chopper knife (9), while this is rotating with a high peripheral speed and the grindstone is fixed,
◆ with a mechanism for guiding the grinding carriage (2) at least over the breadth of the chopper cylinder (1) and in a direction parallel to the rotational axis,
◆ with a grindstone (8) fixed to the grinding carriage (2) and pointing to the rotational circle of the chopper knife (9) and a drive motor (10) arranged on the grinding carriage (2),
**characterised in that**
a) the chain drive sprocket wheel (11) or spur-toothed drive wheel (11) of the drive motor (10) engages with a tensioned piece of chain (13) or a gear rack (13), which extends in the direction of the mechanism for guiding the grinding carriage (2) between the fixed side walls (4', 4") of the chopper cylinder frame or the casing of the grinding device respectively,
b) at the points of reversal of the grinding carriage (2) during its to and fro movement signal transmitters (20' 20") are arranged for reversing the direction of rotation of the drive motor (10).

2. A device in accordance with claim 1, **characterised in that**, with an arrangement of the grinding device above the chopper cylinder (1) the drive shaft (12) of the drive motor (10) extends vertically downwards, so that the chain drive sprocket wheel (11) or the spur-toothed drive wheel (11) engages in a horizontal plane with the piece of chain (13) or the gear rack (13).

3. A device in accordance with claims 1 and 2, **characterised in that**, directly next to the chain drive sprocket wheel (11) and in the same horizontal plane as it, a guide pinion (14) is arranged in such a way that it increases the wrap-around angle of the piece of chain (13) around the chain drive sprocket wheel (11).

4. A device in accordance with claims 1 to 3, **characterised in that**, the drive motor (10) is an electric motor.

5. A device in accordance with claims 1 to 3, **characterised in that**, the drive motor is a hydraulic motor.

6. A device in accordance with claims 1 to 5, **characterised in that**, the signal transmitters (20', 20") are magnetic sensors, which respond to the approach of the grinding carriage (2).

7. A device in accordance with claims 1 to 3, **characterised in that**, the piece of chain (13) is attached between the fixed side walls (4', 4") of the chopper cylinder frame and the casing of the grinding device at one end by means of a fixing bolt (15) and at the other end with a tensioning bolt (17), the effective length of which is adjustable.

## Revendications

1. Dispositif pour l'affûtage des couteaux (9) de hacheuses à tambour :
◆ qui affûte les couteaux (9) alors que ceux-ci tournent à une vitesse circonférentielle élevée et que l'affiloir reste fixe,
◆ avec un dispositif pour le guidage du chariot d'affûtage (2), au moins sur la largeur du tambour hacheur (1) et dans une direction parallèle à son axe de rotation,
◆ avec un affiloir (8) fixé sur le chariot d'affûtage (2) et dirigé vers le cercle de rotation des couteaux (9) du tambour hacheur (1), et un moteur de commande (10) disposé sur le chariot d'affûtage (2),
**caractérisé en ce que**
a) le barbotin (11) ou la roue dentée de commande (11) du moteur de commande (10) est engrené(e) à un élément de chaîne (13) tendu ou à une crémaillère (13), lequel/laquelle s'étend dans le sens du dispositif de guidage du chariot d'affûtage (2) entre les parois latérales fixes (4', 4") du bâti du tambour hacheur ou du boîtier du dispositif d'affûtage,
b) des dispositifs avertisseurs (20', 20") sont disposés aux points d'inversion du chariot d'affûtage (2), lors de son mouvement de va-et-vient, de manière à commuter le sens de rotation du moteur de commande (10).

2. Dispositif selon la revendication 1, **caractérisé en ce que**, pour un agencement du dispositif d'affûtage au-dessus du tambour hacheur (1), l'arbre de commande (12) du moteur de commande (10) s'étend verticalement vers le bas, de manière à ce que le barbotin (11) ou la roue dentée de commande (11) est engrené(e) dans son plan horizontal à l'élément de chaîne (13) ou à la crémaillère (13).

3. Dispositif selon les revendications 1 et 2, **caractérisé en ce qu'**un pignon de guidage (14) est disposé immédiatement à côté du barbotin (11) et dans le même plan horizontal que celui-ci, de manière à augmenter l'angle de contact de l'élément de chaîne (13) autour du barbotin (11).

4. Dispositif selon les revendications 1 à 3, **caractérisé en ce que** le moteur de commande (10) est un moteur électrique.

5. Dispositif selon les revendications 1 à 3, **caractérisé en ce que** le moteur de commande (10) est un moteur hydraulique.

6. Dispositif selon les revendications 1 à 5, **caractérisé en ce que** les dispositifs avertisseurs (20', 20") sont des capteurs magnétiques qui réagissent à l'approche du chariot d'affûtage (2).

7. Dispositif selon les revendications 1 à 3, **caractérisé en ce que** l'élément de chaîne (13) est monté entre les parois latérales fixes (4', 4") du bâti du tambour hacheur ou du boîtier du dispositif d'affûtage, à une extrémité par un boulon de fixation (15), et à l'autre extrémité par un boulon de serrage (17) dont la longueur effective est réglable.
